# EUROPEAN PATENT APPLICATION

(11) **EP 4 848 014 A1**
(43) Date of publication of application: **02.12.2026**
(21) Application number: 25305757.4
(22) Date of filing: 27.05.2025
(51) Int. Cl.: G05B 19/05

(54) **PLC USING ETHERNET MAC FRAMES FOR BACKPLANE DATA EXCHANGES**

(71) Applicant: SCHNEIDER ELECTRIC INDUSTRIES SAS, 92500 Rueil-Malmaison (FR)
(72) Inventor: GORISSE, François, 06250 MOUGINS (FR); BARBIER, Kévin, 06480 LA COLLE-SUR-LOUP (FR); HUGARD, Jean-Francois, 06510 GATTIERES (FR); MENDYK, Rodolphe, 06210 MANDELIEU (FR)
(74) Representative: Plasseraud IP

(57) **Abstract**

The present disclosure relates to a central processing unit, CPU (11), of a programmable logic controller, PLC (10), configured to exchange data, via a backplane (14) of the PLC, with at least one input module (12) and/or at least one output module (13) of the PLC, wherein the CPU is configured to execute an application program, wherein executing the application program comprises executing recurrently a processing cycle comprising an input phase for receiving input data from the input module, a processing phase for processing the input data and determining output data, and an output phase for transmitting the output data to the output module, wherein the CPU is configured to receive input data and to transmit output data via the backplane by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

## Description

### Technical field

The present disclosure relates to programmable logic controllers, PLCs, and relates more specifically to a PLC comprising a backplane using the Ethernet communication protocol for exchanging data between a central processing unit of the PLC, and input and output modules of the PLC.

### Background

A PLC is an industrial computer adapted for the control of manufacturing processes, such as assembly lines, machines, robotic devices, or any activity that requires high reliability, ease of programming, process fault diagnosis, etc. (see e.g. the standards IEC 61131 and IEC 61499 defined by the International Electrotechnical Commission).

A PLC comprises typically a central processing unit, CPU, which is adapted to exchange data with one or more input modules, and with one or more output modules of the PLC. A input module typically collects measurements from one or more sensors, and sends the collected measurements as input data to the CPU. The CPU then processes the input data received from the input module(s) and generates output data which is transmitted to the output module(s). An output module is typically connected to one or more actuators. The received output data comprises data for controlling the actuator(s), and the output module dispatches the received output data to each recipient actuator.

Typically, the CPU is configured to execute recurrently a processing cycle. The processing cycle comprises an input phase for receiving the input data from the input module(s), a processing phase for processing the input data and determining the output data, and an output phase for transmitting the output data to the output module(s).

The data exchange between the CPU and the input module(s) and the output module(s) is done via a backplane, using a communication protocol. Depending on the application program executed by the PLC, this data exchange may be subject to real-time constraints in order to enable a real-time control of the actuator(s) in response to the latest sensor measurements.

In many cases, a proprietary communication protocol is used on the backplane, to ensure that the real-time constraints are met. Such proprietary communication protocols may have limited data throughputs, and may be difficult to use when the amount of data to exchange becomes important.

For these reasons, it is considered to use the Ethernet communication protocol, to increase the available data throughput (for example up to 100 Mbit/s or even up to 1 Gbit/s). For that purpose, the PLC may in some cases comprise one or more switches in order to enable a more efficient Ethernet communication between the different equipment of the PLC (CPU, input module(s), output module(s), etc.).

However, the Ethernet communication protocol is usually used with internet protocol, IP, protocols which cannot ensure that the real-time constraints are met (e.g. transport control protocol, TCP) or which are not sufficiently robust (e.g. user datagram protocol, UDP). Also, industrial networks may need to be isolated from other networks, such that ports of the switch(es) of the PLC may be blocked, such that it may not be possible to rely on different IP ports to distinguish between different application programs, such that it is not possible with existing solutions to distinguish Ethernet frames, carrying data for the application program executed by the PLC, from other Ethernet frames.

### Summary

The present disclosure aims at improving the situation. In particular, the present disclosure aims at addressing at least some of the limitations of the prior art discussed above. In particular, the present disclosure aims at proposing a solution for enabling using the standard Ethernet communication even when IP protocols cannot be used.

Also, the present disclosure aims at proposing, in some embodiments at least, a solution for synchronizing in time the data exchanges with a program cycle of the PLC, in particular from the input module(s) to the CPU.

For that purpose, and according to a first aspect, the present disclosure relates to a central processing unit, CPU, of a programmable logic controller, PLC, configured to exchange data, via a backplane of the PLC, with at least one input module and/or at least one output module of the PLC, wherein the CPU is configured to execute an application program, wherein executing the application program comprises executing recurrently a processing cycle comprising an input phase for receiving input data from the input module, a processing phase for processing the input data and determining output data, and an output phase for transmitting the output data to the output module, wherein the CPU is configured to receive input data and/or to transmit output data via the backplane by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

Hence, it is proposed to perform the data exchanges, between the CPU and the input module and the output module, mainly at the layer 2 (data link layer) of the OSI model. With the Ethernet communication protocol, a MAC address identifies uniquely each equipment, and it is proposed to rely on existing logical link control, LLC, mechanisms to introduce an indication of the application program for which the Ethernet MAC frame carries data. More specifically, it is proposed to use the SNAP extension of the LLC protocol and to use the OUI and protocol ID fields to introduce, at the layer 2 level, an indication of the application program for which the Ethernet MAC frame carries data. Hence, it is possible to distinguish Ethernet MAC frames, carrying data for the application program executed by the PLC, from other Ethernet MAC frames, even when IP protocols such as TCP/IP or UDP/IP cannot be used (e.g. if the PLC comprises one or more switches having ports blocked). Also, by relying mainly on a communication at the layer 2 level, the latency introduced is limited due to the limited number of protocol layers involved, which is beneficial for application programs having real-time constraints.

In some embodiments, the CPU may further comprise one or more of the following optional features, considered either alone or in any technically possible combination.

In some embodiments, the CPU is further configured to transmit control data to the input module by using another communication protocol, different from the Ethernet communication protocol.

In some embodiments, the CPU is configured to transmit to the input module, after the execution of a previous processing cycle and before the execution of a subsequent processing cycle, control data which comprises information representative of a duration of the previous processing cycle.

In some embodiments, the CPU is configured to execute periodically the processing cycle with a period duration, and to transmit control data to the input module which includes information representative of the period duration.

In some embodiments, the CPU is configured to execute a subsequent processing cycle at the expiration of a timeout duration after the end of the previous processing cycle, and to transmit control data to the input module which includes information representative of the timeout duration.

In some embodiments, the CPU is configured to exchange data with a plurality of input modules of the PLC, and to transmit control data to each input module which includes time multiplexing information specific to said input module.

In some embodiments, the CPU is configured to execute the input phase during at most a predetermined maximum transfer duration, wherein the maximum transfer duration is greater than or equal to a duration needed by the input module to transmit a predetermined maximum amount of input data by using the Ethernet communication protocol.

In some embodiments, time synchronization of the input module with the processing cycle of the CPU uses the network time protocol, NTP, or the precise time protocol, PTP, or the network time security, NTS, protocol.

In some embodiments, data exchanges with the Ethernet communication protocol use the time-sensitive networking, TSN, technology.

In some embodiments, the PLC comprises one or more (internal) switches having ports blocked.

In some embodiments, the CPU is configured to exchange MAC addresses with the input module and/or the output module.

According to a second aspect, the present disclosure relates to an input module of a programmable logic controller, PLC, configured to exchange data, via a backplane of the PLC, with a central processing unit, CPU, of the PLC, wherein the CPU is configured to execute an application program, wherein executing the application program comprises executing recurrently a processing cycle comprising an input phase for receiving input data from the input module, a processing phase for processing the input data and determining output data, and an output phase for transmitting the output data to an output module of the PLC, wherein the input module is configured to transmit input data via the backplane by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

In some embodiments, the input module may further comprise one or more of the following optional features, considered either alone or in any technically possible combination.

In some embodiments, the input module is configured to receive control data from the CPU by using another communication protocol, different from the Ethernet communication protocol.

In some embodiments, the control data comprises information representative of a duration of a previous processing cycle, transmitted by the CPU after the execution of the previous processing cycle and before the execution of a subsequent processing cycle, and the input module is configured to determine a start time for transmitting input data to the CPU, to be used by the CPU during the subsequent processing cycle, based on the received information representative of the duration of the previous processing cycle.

In some embodiments, the CPU being configured to execute periodically the processing cycle with a period duration, the control data comprises information representative of the period duration, and the input module is configured to determine a start time for transmitting input data to the CPU based on the received information representative of the period duration.

In some embodiments, the CPU being configured to execute a subsequent processing cycle at the expiration of a timeout duration after the end of the previous processing cycle, the control data comprises information representative of the timeout duration, and the input module is configured to determine a start time for transmitting input data to the CPU, to be used by the CPU during the subsequent processing cycle, based on the received information representative of the timeout duration.

In some embodiments, the CPU being configured to exchange data with a plurality of input modules of the PLC, the control data comprises time multiplexing information specific to said input module, and the input module is configured to determine a start time for transmitting input data to the CPU based on the received time multiplexing information.

According to a third aspect, the present disclosure relates to an output module of a programmable logic controller, PLC, configured to exchange data, via a backplane of the PLC, with a central processing unit, CPU, of the PLC, wherein the CPU is configured to execute an application program, wherein executing the application program comprises executing recurrently a processing cycle comprising an input phase for receiving input data from an input module, a processing phase for processing the input data and determining output data, and an output phase for transmitting the output data to the output module of the PLC, wherein the output module is configured to receive output data via the backplane by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

According to a fourth aspect, the present disclosure relates to a programmable logic controller, PLC, comprising a central processing unit, CPU, according to any one of the embodiments of the present disclosure, an input module according to any one of the embodiments of the present disclosure and an output module, wherein the CPU is configured to exchange data with the input module and the output module via a backplane of the PLC.

### Brief description of figures

The invention will be better understood upon reading the following description, given as an example that is in no way limiting, and made in reference to the figures which show:
- Figure 1: a schematic representation of an example of a PLC,
- Figure 2: a schematic representation of a processing cycle executed by a CPU,
- Figure 3: a schematic representation of an example in which another communication protocol is used to transmit control data to an output module of the PLC,
- Figure 4: a schematic representation of an example in which another communication protocol is used to transmit control data to an input module of the PLC.

In these figures, references identical from one figure to another designate identical or analogous elements. For reasons of clarity, the elements shown are not to scale, unless explicitly stated otherwise.

### Detailed description

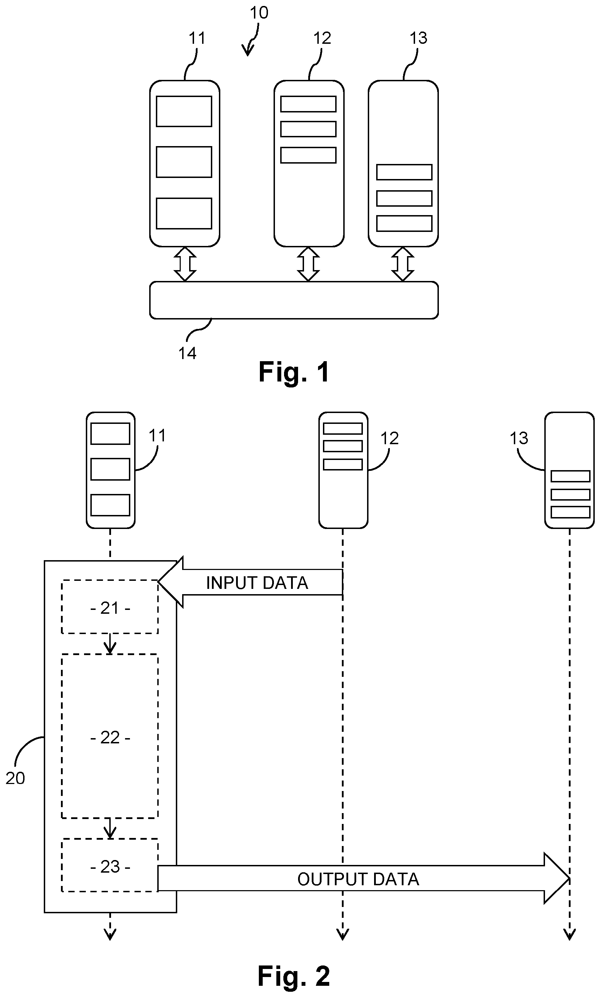

Figure 1 represents schematically an example of programmable logic controller, PLC 10. In this example, the PLC 10 comprises a central processing unit, CPU 11, an input module 12 and an output module 13. As indicated above, the PLC 10 may comprise, in some examples, more than one input module 12 and/or more than one output module 13.

The CPU 11 is adapted to exchange data with the input module 12 and with the output module 13 via a backplane 14 of the PLC 10. The backplane 14 corresponds to a shared bus of the PLC 10, used to distribute data (and power).

The input module 12 collects measurements from one or more sensors (not represented in the figures), and sends the collected measurements as input data to the CPU 11, via the backplane 14.

The CPU 11 is configured to execute an application program which processes the input data received from the input module 12 and generates output data which is transmitted to the output module 13, via the backplane 14.

The output module 13 is connected to one or more actuators (not represented in the figures), and the received output data comprises data for controlling the actuator(s).

It should be noted that there exist different types of input modules 12 and output modules 13. For example, an input module 12 may be connected directly to one or more sensors, in which case it receives directly the electrical signals provided by the one or more sensors (which may be digital and/or analog signals) and converts these electrical signals into input data which can be processed by the CPU 11. Such an input module 12 is sometimes referred to as "input converter". Similarly, an output module 13 may be connected directly to one or more actuators, in which case it receives output data from the CPU 11 and converts this output data into electrical signals which control the one or more actuators. Such an output module 13 is sometimes referred to as "output converter". Also, an input module 12 or an output module 13 may be a network module (a.k.a. "communication module") which acts as an interface for input data (e.g. from sensors) or output data (e.g. towards actuators) over a network, allowing the PLC 10 to communicate with remote devices via e.g. a switch. Such a network module can be either an input module 12, or an output module 13, or both. In the following, an input module 12 may be either an input converter or a network (input) module. Also, an output module 13 may be either an output converter or a network (output) module. In preferred embodiments, the input module(s) 12 of the PLC 10 comprise at least one network (input) module and/or the output module(s) 13 of the PLC 10 comprise at least one network (output) module.

The CPU 11 is configured to execute an application program which executes recurrently a processing cycle 20. As illustrated by figure 2, the processing cycle 20 comprises mainly three different phases:
- an input phase 21 during which the CPU 11 reads the input data, received from the input module 12, from an input buffer,
- a processing phase 22 during which the CPU 11 processes the input data and determines the output data,
- an output phase 23 during which the CPU 11 transmits the output data to the output module 13.

In some examples, the processing cycle 20 may be executed periodically, with a predefined period duration T_{P} (hereinafter "periodic mode"). In other words, if the CPU 11 starts executing the processing cycle 20 at a time T0, then subsequent executions of the processing cycle 20 start at times (T0 + T_{P}), (T0 + 2xT_{P}), (T0 + 3xT_{P}), etc.

In other examples, the processing cycle 20 may be executed cyclically, with a predefined timeout duration δT (hereinafter "cyclic mode") between the end of the execution of the previous processing cycle 20 and the start of the execution of the subsequent processing cycle 20. In other words, if the CPU 11 ends executing the previous processing cycle 20 at a time T1, then the execution of the subsequent processing cycle 20 starts at a time (T1 + δT). It should be noted that the duration of the processing cycle 20 may vary over time. In other words, if we designate by ΔT[n] the duration of the execution of the n^{th} processing cycle 20 and by ΔT[m] the duration of the execution of the m^{th} processing cycle 20, then ΔT[n] and ΔT[m] may be different.

In the present case, the backplane 14 comprises at least an Ethernet data bus. Hence, the CPU 11 can exchange data with the input module 12 and the output module 13 by using the Ethernet communication protocol (as defined by the IEEE 802.3 specification), and the data exchanged is included in Ethernet medium access control, MAC, frames. In some examples, the PLC 10 may comprise one of more switches (not represented in the figures), in order to enable a more efficient Ethernet communication between the different equipment of the PLC 10 (CPU 11, input module(s) 12, output module(s) 13, etc.). For example, the CPU 11 (or the backplane 14) may comprise an internal switch having multiple ports. Also, a network module (i.e. input module 12 and/or output module 13) may also comprise an internal switch having multiple ports.

As discussed above, the Ethernet communication protocol is usually used with IP protocols (e.g. TCP, UDP, etc.). However, these IP protocols may not be usable in some cases. For example, the PLC 10 may comprise one or more switches which may comprise ports which are blocked (e.g., in order to isolate the industrial network, which comprises the PLC 10, from other networks). However, a switch having ports blocked is nonetheless capable of routing SNAP traffic (see below).

Hence, it is proposed to perform the data exchanges, between the CPU 11 and the input module 12 and the output module 13, mainly at the layer 2 (data link layer). However, the transport over Ethernet is in the prior art decorrelated from the application layer, i.e. the Ethernet MAC header as such carries no information enabling to identify that the data included in the Ethernet MAC frame relates to the application program of the PLC 10.

It is therefore proposed to use the SNAP extension of the LLC protocol (as defined by the IEEE 802.2 specification) to introduce, at the layer 2 level, information enabling the CPU 11, the input module 12 and the output module 13 to determine that the data included in the Ethernet MAC frame relates to the application program executed by the PLC 10.

The SNAP extension introduces a SNAP header which follows the IEEE 802.2 LLC header if the destination service access point (DSAP) field and the source service access point (SSAP) field of the LLC header contain hexadecimal values of AA or AB. The different fields of the LLC header and of the SNAP header are given in Table 1.

**Table 1**

| **LLC header** | | | **SNAP header** | |
|---|---|---|---|---|
| DSAP | SSAP | Control | OUI | Protocol ID |
| 1 octet | 1 octet | 1 or 2 octets | 3 octets | 2 octets |

The SNAP header consists of a 3-octet IEEE organizationally unique identifier (OUI) followed by a 2-octet protocol identifier (ID). If the OUI is zero, the protocol ID is the registered EtherType value for the communication protocol running on top of SNAP. If the OUI is an OUI for a particular organization, the protocol ID is a value assigned by that organization to the communication protocol running on top of SNAP.

In the present case, the protocol ID is used to designate, in association with a non-zero OUI, the application program executed by the PLC 10. Hence, the CPU 11, the input module 12 and the output module 13 can determine, by reading the OUI and the protocol ID fields, that the data included in the Ethernet MAC frame relates to the application program executed by the PLC 10.

When using the Ethernet communication protocol for exchanging data, MAC addresses are used to identify the emitter and the recipient of a MAC frame. Hence, each component of the PLC 10 may need to know the MAC addresses of other components of the PLC 10. For example, the CPU 11 may need to know the MAC address associated to the input module 12 to determine that a MAC frame, received with this MAC address for the emitter component, corresponds to a MAC frame received from the input module 12. Similarly, the input module 12, when it has input data to transmit, needs to know the MAC address of the CPU 11 to identify the recipient component in the transmitted MAC frame, etc. Generally, any method known to the skilled person may be used to enable each component of the PLC 10 to obtain MAC addresses of other components of the PLC 10. For example, each component (e.g. CPU 11, input module 12, output module 13) may be preconfigured with a mapping table which lists the different MAC addresses and, for each MAC address, the type of component (e.g. CPU, input module, output module) which uses this MAC address and, optionally, a slot in the rack or chassis of the PLC 10 where this component is inserted. For example, such a pre-configuration may be carried out during an enrolment procedure of the different components. According to another example, the PLC 10 may implement a discovery phase which enables each component of the PLC 10 to obtain information from other components. For example, the discovery phase may rely on the link layer discovery protocol (LLDP), which enables the components of the PLC 10 to exchange their MAC addresses and, optionally, other information such as the type of the component (e.g. CPU, input module, output module), the slot of the component, etc.

When using the Ethernet communication protocol for exchanging data between the CPU 11 and the input module 12 and the output module 13, it may be necessary in some cases to introduce time synchronization mechanisms to synchronize in time the CPU 11 with the input module 12, and possibly with the output module 13, in particular for application programs having real-time constraints. In particular, such time synchronization mechanisms may be used to enable the CPU 11 to process the latest sensor measurements received by the input module 12 and/or to enable the output module 13 to act quickly on the output data determined and transmitted by the CPU 11.

In some examples, such a time synchronization of the input module 12 (and possibly the output module 13) with the processing cycle 20 of the CPU 11 may be based on the network time protocol, NTP, or the precise time protocol, PTP, or the network time security, NTS, protocol. However, usage of NTP or PTP or NTS may require specific hardware such as switches supporting NTP or PTP or NTS.

In other examples, the PLC 10 may use the time-sensitive networking, TSN, extension of the Ethernet communication protocol. Indeed, TSN introduces mechanisms which enable using the Ethernet communication protocol for real-time applications. However, usage of TSN may require specific hardware such as switches supporting NTS.

In some embodiments, the backplane 14 comprises another data bus (hereinafter "second data bus"), separate from the Ethernet data bus, that can be used also for exchanging data by using another communication protocol (hereinafter "second communication protocol"), different from the Ethernet communication protocol. In such a case, the second communication protocol may be used to exchange control data for synchronizing in time, to some extent at least, the CPU 11 with the input module 12, and optionally the CPU 11 with the output module 13.

For example, the second communication protocol may be a real-time communication protocol. For example, the second communication protocol may correspond to a proprietary communication protocol (e.g. XBUS, etc.) or to a standardized communication protocol. Alternatively, or in combination thereof, the second communication protocol may have a maximum data throughput that is lower than the maximum data throughput of the Ethernet communication protocol. For example, the Ethernet communication protocol may be used for exchanging input data, output data and optionally some control data, while the second communication protocol may be used for exchanging only control data.

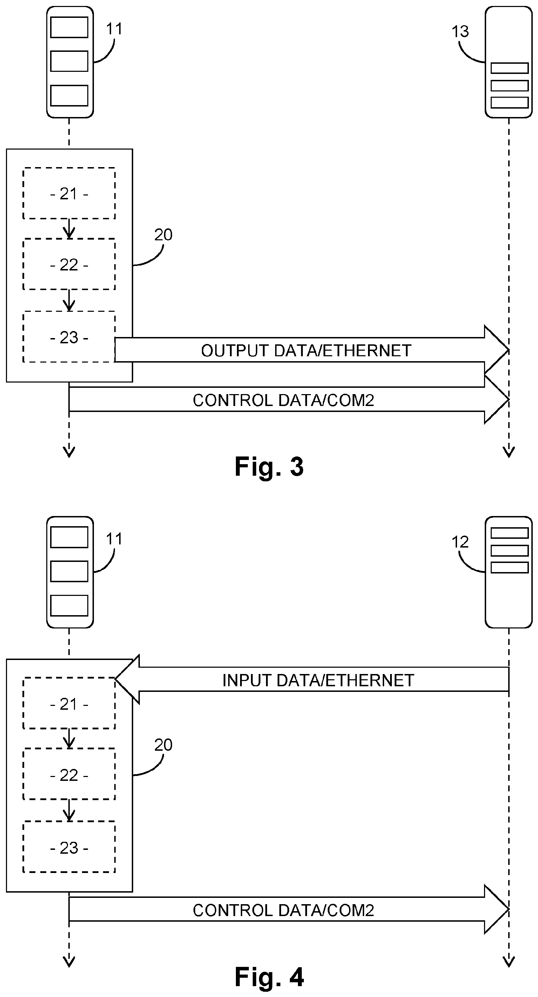

In some examples, and as illustrated by figure 3, the CPU 11 may use the second communication protocol to transmit control data to the output module 13. As illustrated by figure 3, the CPU 11 transmits output data to the output module 13 during the output phase 23 of the processing cycle 20, using the Ethernet communication protocol ("OUTPUT DATA/ETHERNET" in figure 3). Also, after the execution of the processing cycle 20 (and, accordingly, after the end output phase 23), and preferably immediately after, the CPU 11 transmits control data to the output module 13, using the second communication protocol ("CONTROL DATA/COM2" in figure 3), in order to notify the output module 13 that the CPU 11 has transmitted output data via the Ethernet data bus. Hence, the output module 13 may retrieve the output data as soon as received from the CPU 11, and it may immediately proceed with sending the corresponding controls to the recipient actuator(s).

Alternatively, or in combination thereof, the CPU 11 may use the second communication protocol to transmit control data to the input module 12, as illustrated by figure 4. As illustrated by figure 4, after the execution of a processing cycle 20, and preferably immediately after, the CPU 11 transmits control data to the input module 12, using the second communication protocol ("CONTROL DATA/COM2" in figure 4), in order to notify the input module 12 that the execution of the previous processing cycle 20 has ended.

This control data, transmitted by the CPU 11 using the second communication protocol, may be used by the input module 12 to determine when it should start transmitting input data to the CPU 11 (using the Ethernet communication protocol), in order to ensure that the input data is received in a timely manner by the CPU 11 (typically before the start of the input phase 21 of the subsequent processing cycle 20).

In a simple embodiment, the input module 12 may start transmitting the input data as soon as possible after it receives the control data from the CPU 11 indicating that the execution of the previous processing cycle has ended. By "as soon as possible", we mean that the input module 12 may transmit immediately the available sensor measurements, or it may wait until the next updated measurements are received, in order to transmit to the CPU 11 input data which includes updated sensor measurements.

In preferred embodiments, the control data, transmitted by the CPU 11 using the second communication protocol, may include information that may be used by the input module 12 to estimate when the subsequent processing cycle 20 will start and, accordingly, when the subsequent input phase 21 will start. Such an estimate may be used by the input module 12 to determine when it should start transmitting input data to the CPU 11 (using the Ethernet communication protocol), in order to ensure that the input data is not only received in a timely manner by the CPU 11, but also that it includes the latest sensor measurements that can be taken into account by the CPU 11.

For example, the input module 12 may use a predetermined maximum transfer duration for transmitting the input data to the CPU 11. This maximum transfer duration is for example greater than or equal to a duration needed by the input module 12 to transmit a predetermined maximum amount of input data by using the Ethernet communication protocol. Indeed, the maximum amount of input data that the input module 12 may have to transmit can be determined beforehand, and the corresponding maximum transfer duration, using the Ethernet communication protocol, can also be estimated in a conventional manner.

In some examples, the maximum transfer duration may be received as control data from the CPU 11, for example using the second communication protocol. For example, the maximum transfer duration may be included in the control data received from the CPU 11 after the end of the execution of the previous processing cycle 20, or in a separate message such as an initial configuration message transmitted by the CPU 11 before starting to execute recurrently the processing cycle 20.

For example, if the estimated start time of the subsequent processing cycle 20 is T_{E}, and if the maximum transfer duration is ΔT_{M}, then it is sufficient for the input module 12 to start transmitting the input data to the CPU 11 at (T_{E} - ΔT_{M}). Hence, the input module 12 can wait until (T_{E} - ΔT_{M}) for updated sensor measurements, which ensures that the CPU 11 will receive the latest possible sensor measurements.

For example, for the periodic mode (with a period duration T_{P}), the control data (transmitted using the second communication protocol after the end of the processing cycle 20) may include information representative of a duration ΔT[n] of the previous processing cycle. In such a case, assuming that the input module 12 receives the control data at a time T2, the estimated start time T_{E} for the subsequent processing cycle 20 may for example be computed as follows: ${T}_{E} = T 2 + {T}_{P} - ΔT \left[n\right] - {ε}_{1} - {ε}_{2}$ wherein:
- ε₁ corresponds to a predetermined delay (determined by simulation, experience, etc.) representing the delay between the actual time T1 at which the execution of the previous processing cycle 20 has ended and the time T2 at which the input module 12 has received the control data,
- ε₂ corresponds to a predetermined temporal margin (determined by simulation, experience, etc., possibly equal to zero) which accounts for sources of inaccuracies which impact the accuracy of the estimate T_{E} (e.g., clock jitter of the input module 12, clock jitter of the CPU 11, etc.).

It should be noted that other expressions may considered for computing the estimated start time T_{E} in the periodic mode. For example, it is possible to discard ε₁ and/or ε₂, if the delay and/or the temporal margin is deemed negligible.

In some examples, the period duration T_{P} may be received as control data from the CPU 11, for example using the second communication protocol. For example, the period duration T_{P} may be included in the control data received by the input module 12 from the CPU 11 after the end of the execution of the previous processing cycle 20, or in a separate message such as an initial configuration message transmitted by the CPU 11 before starting to execute recurrently the processing cycle 20.

For example, for the cyclic mode (with a timeout duration δT), the control data may consist in a message indicating that the execution of the previous processing cycle has ended, and this control data is received by the input module 12 at a time T2. In such a case, the estimated start time T_{E} for the subsequent processing cycle 20 may for example be computed as follows: ${T}_{E} = T 2 + δT - {ε}_{1} - {ε}_{2}$
wherein ε₁ corresponds to a predetermined delay and ε₂ corresponds to a predetermined temporal margin, as defined hereinabove. It should be noted that other expressions may considered for computing the estimated start time T_{E} in the periodic mode. For example, it is possible to discard ε₁ and/or ε₂, if the delay and/or the temporal margin is deemed negligible.

In some examples, the timeout duration δT may be received as control data from the CPU 11, for example using the second communication protocol. For example, the timeout duration δT may be included in the control data received by the input module 12 from the CPU 11 after the end of the execution of the previous processing cycle 20, or in a separate message such as an initial configuration message transmitted by the CPU 11 before starting to execute recurrently the processing cycle 20.

Then, as discussed above, the input module 12 may for example start transmitting the input data at (T_{E} - ΔT_{M}).

It should be noted that, if the PLC 10 comprises a plurality of input modules 12, then additional mechanisms may need to be introduced to reduce the collision probability on the Ethernet data bus. Indeed, if all input modules 12 start transmitting input data at (T_{E} - ΔT_{M}), then collisions will likely occur on the Ethernet data bus. In order to reduce the collision probability, each input module 12 may be configured with time multiplexing information specific to this input module 12, which enables said input module 12 to start transmitting its input data at a time likely different from the other input modules 12.

In some examples, this (input module-specific) time multiplexing information may be received as control data from the CPU 11, for example using the second communication protocol. For example, this (input module-specific) time multiplexing information may be included in the control data received by the input module 12 from the CPU 11 after the end of the execution of the previous processing cycle 20, or in a separate message such as an initial configuration message transmitted by the CPU 11 before starting to execute recurrently the processing cycle 20.

For example, the time multiplexing information includes a rank k of the input module 12. If the PLC 10 comprises N input modules 12, then the rank k is for example an integer such that 1 ≤ k ≤ N, and all input modules 12 are allocated different ranks. In such a case, the input module 12 having the rank k may for example start transmitting the input data at (T_{E} - kxΔT_{M}). Of course, other types of time multiplexing information may be considered, and the choice of a specific type of time multiplexing information corresponds to a specific but non-limitative embodiment of the present disclosure.

Alternatively, or in combination thereof, the CPU 11 may also, in some examples, be configured to execute the input phase 21 during at most the predetermined maximum transfer duration ΔT_{M}. In other words, the CPU 11 waits at most ΔT_{M} before starting to execute the processing phase 22 of the processing cycle 20. Indeed, if the input data is not completely received when the CPU 11 starts the execution of the subsequent processing cycle 20, then the reception of the input data should not take longer than ΔT_{M}. When starting the execution of the subsequent processing cycle 20, the CPU 11 may therefore start a timer set to ΔT_{M}. As soon as the input data is completely received, the CPU 11 may stop the timer and start the processing phase 22. If the timer expires and all or part of the input data is missing, then an error is detected and predetermined corrective actions (out of scope of the present disclosure) may be triggered.

It is emphasized that the present disclosure is not limited to the above exemplary embodiments. Variants of the above exemplary embodiments are also within the scope of the present disclosure.

For example, the present disclosure has been made by considering mainly the case of Ethernet MAC frames transmitted with a SNAP field identifying the application program of the PLC 10. However, all that has been said regarding the time synchronization between the CPU 11 and the input module(s) 12 (and, optionally, the output module(s) 13), using a second communication protocol (different from the Ethernet communication protocol), can be used also even when the SNAP field is not used for designating the application program.

Also, when a second communication protocol is supported by the PLC 10, this second communication protocol can also be used, in some examples, for exchanging input data and/or output data. For example, if the Ethernet communication protocol has a greater maximum data throughput, then it may for example be used when the amount of data to be exchanged is important, while the second communication protocol may be used when the amount of data to be exchanged is limited. In other examples, it is possible to use the Ethernet communication protocol for transmitting the input data from the input module 12 to the CPU 11, and to use the second communication protocol for transmitting the output data from the CPU 11 to the output module 13 (or inversely). In some examples, when the PLC 10 comprises a plurality of input modules 12 (resp. a plurality of output modules 13), it is possible to use the Ethernet communication protocol with some input modules 12 (resp. with some output modules 13) and to use the second communication protocol with the other input modules 12 (resp. with the other output modules 13), etc.

Also, the present disclosure has been made by considering the case where it might not be possible to use IP protocols. However, the present disclosure may be used even when IP protocols can be used.

## Claims

1. A central processing unit, CPU (11), of a programmable logic controller, PLC (10), configured to exchange data, via a backplane (14) of the PLC, with at least one input module (12) and/or at least one output module (13) of the PLC, wherein the CPU is configured to execute an application program, wherein executing the application program comprises executing recurrently a processing cycle (20) comprising an input phase (21) for receiving input data from the input module, a processing phase (22) for processing the input data and determining output data, and an output phase (23) for transmitting the output data to the output module, wherein the CPU (11) is configured to receive input data and/or to transmit output data via the backplane (14) by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

2. The CPU (11) according to claim 1, further configured to transmit control data to the input module by using another communication protocol, different from the Ethernet communication protocol.

3. The CPU (11) according to claim 2, configured to transmit to the input module, after the execution of a previous processing cycle and before the execution of a subsequent processing cycle, control data which comprises information representative of a duration of the previous processing cycle.

4. The CPU (11) according to any one of claims 2 to 3, configured to execute periodically the processing cycle with a period duration, and to transmit control data to the input module which includes information representative of the period duration.

5. The CPU (11) according to any one of claims 2 to 3, configured to execute a subsequent processing cycle at the expiration of a timeout duration after the end of the previous processing cycle, and to transmit control data to the input module which includes information representative of the timeout duration.

6. The CPU (11) according to any one of claims 2 to 5, configured to exchange data with a plurality of input modules of the PLC, and to transmit control data to each input module which includes time multiplexing information specific to said input module.

7. The CPU (11) according to any one of claims 2 to 6, configured to execute the input phase during at most a predetermined maximum transfer duration, wherein the maximum transfer duration is greater than or equal to a duration needed by the input module to transmit a predetermined maximum amount of input data by using the Ethernet communication protocol.

8. The CPU (11) according to claim 1, wherein time synchronization of the input module with the processing cycle of the CPU uses the network time protocol, NTP, or the precise time protocol, PTP, or the network time security, NTS, protocol.

9. An input module (12) of a programmable logic controller, PLC (10), configured to exchange data, via a backplane of the PLC, with a central processing unit, CPU (11), of the PLC, wherein the CPU is configured to execute an application program, wherein executing the application program comprises executing recurrently a processing cycle comprising an input phase for receiving input data from the input module, a processing phase for processing the input data and determining output data, and an output phase for transmitting the output data to an output module (13) of the PLC, wherein the input module is configured to transmit input data via the backplane by using Ethernet medium access control, MAC, frames, wherein the Ethernet MAC frames are transmitted with a subnetwork access protocol, SNAP, field which comprises an organizationally unique identifier, OUI, and a protocol identifier, ID, which designate the application program of the CPU.

10. The input module (12) according to claim 9, configured to receive control data from the CPU by using another communication protocol, different from the Ethernet communication protocol.

11. The input module (12) according to claim 10, wherein the control data comprises information representative of a duration of a previous processing cycle, transmitted by the CPU after the execution of the previous processing cycle and before the execution of a subsequent processing cycle, and the input module is configured to determine a start time for transmitting input data to the CPU, to be used by the CPU during the subsequent processing cycle, based on the received information representative of the duration of the previous processing cycle.

12. The input module (12) according to any one of claims 10 to 11, wherein, the CPU being configured to execute periodically the processing cycle with a period duration, the control data comprises information representative of the period duration, and the input module is configured to determine a start time for transmitting input data to the CPU based on the received information representative of the period duration.

13. The input module (12) according to any one of claims 10 to 11, wherein, the CPU being configured to execute a subsequent processing cycle at the expiration of a timeout duration after the end of the previous processing cycle, the control data comprises information representative of the timeout duration, and the input module is configured to determine a start time for transmitting input data to the CPU, to be used by the CPU during the subsequent processing cycle, based on the received information representative of the timeout duration.

14. The input module (12) according to any one of claims 10 to 13, wherein, the CPU being configured to exchange data with a plurality of input modules of the PLC, the control data comprises time multiplexing information specific to said input module, and the input module is configured to determine a start time for transmitting input data to the CPU based on the received time multiplexing information.

15. A programmable logic controller, PLC (10), comprising a central processing unit, CPU (11), according to any one claims 1 to 8, an input module (12) according to any one of claims 9 to 14 and an output module (13), wherein the CPU is configured to exchange data with the input module and the output module via a backplane of the PLC.
